# EUROPÄISCHE PATENTSCHRIFT

(11) **EP 1 648 676 B1**
(45) Veröffentlichungstag und Bekanntmachung des Hinweises auf die Patenterteilung: **24.06.2009**
(21) Anmeldenummer: 04763404.3
(22) Anmeldetag: 22.07.2004
(51) Int. Cl.: B29C 43/14, B29C 43/52, B60R 13/08

(54) **SCHALLISOLIERENDES VERBUNDTEIL UND VERFAHREN ZU DESSEN HERSTELLUNG**
NOISE-INSULATING COMPOSITE PART AND METHOD FOR THE PRODUCTION THEREOF
PIECE COMPOSITE D'INSONORISATION, ET SON PROCEDE DE PRODUCTION

(30) Priorität: 25.07.2003 DE 10334274
(43) Veröffentlichungstag der Anmeldung: 26.04.2006
(73) Patentinhaber: Carcoustics TechConsult GmbH, 51381 Leverkusen (DE)
(72) Erfinder: BLÖMELING, Heinz, 42799 Leichlingen (DE)
(74) Vertreter: Cohausz & Florack
(86) Internationale Anmeldenummer: PCT/EP2004/008202
(87) Internationale Veröffentlichungsnummer: WO 2005/011949

(56) Entgegenhaltungen:
- EP-A- 0 764 506
- EP-A- 0 896 079
- DE-A- 4 117 797
- DE-A- 10 100 747
- DE-A- 10 116 261
- GB-A- 2 216 081
- PATENT ABSTRACTS OF JAPAN Bd. 0173, Nr. 52 (M-1439), 5. Juli 1993 (1993-07-05) & JP 5 050452 A (KASAI KOGYO CO LTD), 2. März 1993 (1993-03-02)

## Beschreibung

Die Erfindung betrifft ein schallisolierendes Verbundteil und ein Verfahren zu dessen Herstellung. Das Verbundteil ist insbesondere für Kraftfahrzeuge bestimmt und weist eine Schwerschicht und eine damit verbundene Schalldämpfungsschicht aus porösem und/oder textilem Material auf.

Zur Herstellung von schallisolierenden Verbundteilen sind im Stand der Technik eine Vielzahl von unterschiedlichen Verfahren bekannt geworden. Die DE 37 41 692 A1 beschreibt ein Verfahren zur Herstellung eines schallisolierenden Verbundteils, bei dem ein Kunststoff-Trägerteil mit einem Dämpfungsteil auf Schaumstoffbasis verbunden wird. Dieses Verfahren ist im wesentlichen dadurch gekennzeichnet, dass zwischen dem Trägerteil und dem Dämpfungsteil ein Schalldämmungsteil in Form einer Schwerfolie angeordnet wird, wobei das Trägerteil und das Schalldämmungsteil vor einer Verbindung der Teile auf einen etwa "weichlappigen" Zustand erhitzt werden und das Trägerteil, das Dämmungsteil und das Dämpfungsteil sodann durch Verpressen miteinander verbunden werden. Die Teile des so erhaltenen Verbundteils sind durch unmittelbares gegenseitiges Eindringen miteinander verbunden.

Aus der DE 40 30 964 A1 ist ein Verfahren zum Herstellen eines Kunststoffformteils bekannt, bei dem die Kunststoffmasse nach der Plastifizierung einer offenen Formkavität eines aus unterer und oberer Werkzeughälfte bestehenden Formwerkzeuges zugeführt und formgeprägt wird. Die plastifizierte Kunststoffmasse wird dabei gegen zumindest eine zwischen den Werkzeughälften eingespannte Dekormaterialbahn formgeprägt. Ferner wird ein Spannrahmen verwendet, der den Kavitätenrand wie eine Tauchkante zu schließen vermag. Als Dekormaterialbahnen werden ein- oder mehrlagige, gegebenenfalls mit Schaumrücken oder dergleichen kaschierte Kunststofffolien, Gewebe, Gewirke, Gestricke, Filze und dergleichen verwendet. An dem so hergestellten Kunststoffformteil wird ein Konturschnitt mittels eines am Spannrahmen angeordneten Trennmessers durchgeführt.

Aus der GB 2 216 081 A ist eine fahrgastraumseitige Stirnwandverkleidung für Kraftfahrzeuge bekannt, die aus einer Schwerschicht mit daran angeformten Abstandsrippen besteht und als Normteil aus thermoplastischem Elastomer im Strangablege-Formpressverfahren hergestellt wird. Die Abstandsrippen sind zur Erzielung einer relativ hohen Steifigkeit der Verkleidung als Stege eines Gitters ausgebildet. In einem Ausführungsbeispiel wird die Stimwandverkieidung zudem noch mit einer Schallabsorberschicht versehen, die Schlitze zur form- sowie reibschlüssigen Aufnahme der stegförmigen Abstandsrippen aufweist

Die DE 101 00 747 A1 offenbart ein Verfahren zum Herstellen einer Airbag-Abdeckung mit einer dran befestigten dekorativen Plakette. In einem Ausführungsbeispiel umfasst ein Plakettenhauptteil eine Mehrzahl von Steckteilen, die von entsprechenden Öffnungen In der Airbag-Abdeckung aufgenommen werden, um die Plakette in Bezug auf die Airbag-Abdeckung zu positionieren. Dabei können auch Mittel für das Warmstecken der Plakette an der Airbag-Abdeckung vorgesehen sein.

Die DE 41 17 797 A1 betrifft ein Verfahren zum Recyceln von Thermoplastabfällen zu Bauelementen. Dabei werden hygienisch unbedenkliche Thermoplastabfälle wie Plastikbecher, Plastikflaschen usw. in kaltem Zustand und sich flächig überlappend mittels eines teilweise erhitzbaren, Spitzen aufweisenden Werkzeuges plattgedrückt, punktförmig verschmolzen und zu einer Platte verbunden.

Von diesem Stand der Technik ausgehend liegt der vorliegenden Erfindung die Aufgabe zugrunde, ein Verfahren zur Herstellung eines schalBsollerenden Verbundteils der eingangs genannten Art anzugeben, mit dem derartige Verbundtelle insbesondere in relativ großen Abmessungen, beispielsweise als Stirnwandverkleidung für ein Kraftfahrzeug, kostengünstig herstellbar sind, wobei die fertigen Verbundteile günstige Recycling-Eigenschaften besitzen sollen. Außerdem liegt der Erfindung die Aufgabe zugrunde, ein entsprechendes Verbundteil zu schaffen.

Diese Aufgabe wird hinsichtlich des Verfahrens durch ein Verfahren mit den Merkmalen des Anspruchs 1 gelöst Das erfindungsgemäße Verfahren umfasst im Wesentlichen folgende Schritte:
- Einbringen eines bestimmten Volumens eines Schwerschichtmaterials als plastifizierte Masse in eine offene Kavität einer ein Unter- und ein Oberwerkzeug aufweisenden Presse,
- Schileßen der Presse, wobei die plastifizierte Masse in der von Unter- und Oberwerkzeug definierten Kavität unter Fließen in die Form der Schwerschicht gepresst wird,
- Öffnen der Presse nachdem die Schwerschicht Formfestigkeit aufweist,
- Anordnen der Schalldämpfungsschicht in Form einer Bahn, eines Zuschnitts oder Spritzgussteils auf der Schwerschicht,
- partielles Verschweißen der Schwerschicht mit der Schalldämpfungsschicht in der Presse oder einer weiteren Presse, indem mehrere in der Presse oder weiteren Presse integrierte, flächenmäßig begrenzte Schweißelemente aktiviert werden, und
- thermisches Umformen der Schalldämpfungsschicht während des partiellen Verschweißens mit der Schwerschicht, so dass die Schalldämpfungsschicht eine Profilstruktur erhält,
wobei die Schalidämpfungsschicht in Bezug auf die Schwerschicht so bemessen wird, dass der Umfang der Schalldämpfungsschicht den Umfang der Schwerschicht an einem oder mehreren Abschnitten oder vollumfänglich überragt.

Das erfindungsgemäße schallisollerende Verbundteil weist die in Anspruch 12 angegebenen Merkmale auf. Es ist im Wesentlichen dadurch gekennzeichnet, dass seine Schwerschicht durch Fließpressen einer im Strangablegeverfahren zugeführten plastifizierten Kunststoffmasse aus der Gruppe der thermoplastischen Elastomere als Formteil ausgebildet ist, Bereiche unterschiedlicher Dicke und/oder Dichte aufweist und nur stellenweise mit einer Schalldämpfungsschicht verschweißt ist, wobei die Schalldämpfungsschicht eine durch thermisches Umformen gebildete Profilstruktur aufweist und der Umfang der Schalldämpfungsschicht den Umfang der Schwerschicht zumindest abschnittsweise überragt.

Das erfindungsgemäße Verfahren bietet die Möglichkeit, relativ große, akustisch wirksame Verkleidungen, insbesondere Stirnwandverkleidung für Kraftfahrzeuge, vergleichsweise kostengünstig herzustellen. Denn das erfindungsgemäße Verfahren ermöglicht es, relativ großflächige Schwerschichten auch aus solche plastifizierbaren Kunststoffmassen, insbesondere thermoplastischen Elastomeren herzustellen, die sich in Spritzgleßwerkzeugen nur schwierig herstellen lassen, zum Beispiel nur unter Verwendung von aufwendig konstruierten Spritzgießwerkzeugen bzw. nur unter Zugabe von das Fließverhalten beeinflussenden Zusätzen. Die für die Durchführung des erfindungsgemäßen Verfahrens erforderlichen Presswerkzeuge sind dagegen vergleichsweise einfach konstruiert und somit kostengünstig erhältlich. Das nicht vollflächige, sondern nur partielle Verbinden von Schwerschicht und Schalldämpfungsschicht ermöglicht bei einem Recycling erfindungsgemäß hergestellter Verbundteile eine relativ einfache, weitgehend sortenreine Trennung von Schwerschicht und Schalldämpfungsschicht. Außerdem ermöglicht das erfindungsgemäße Verfahren eine im Wesentlichen abfallfrele Herstellung gattungsgemäßer Verbundteile.

Für das partielle Verschweißen von Schwerschicht und Schalldämpfungsschicht kann das Unterwerkzeug und/oder das Oberwerkzeug gegen ein Unterwerkzeug bzw. Oberwerkzeug ausgetauscht werden, das zu einer Vergrößerung der von Unterwerkzeug und Oberwerkzeug definierten Kavität führt. Die Vergrößerung der Kavität kann dabei insbesondere am Rand der Schwerschicht und/oder im Bereich eines in der Schwerschicht ausgebildeten Durchbruchs vorgesehen sein.

Weitere bevorzugte und vorteilhafte Ausgestaltungen der Erfindung sind in den unteransprüchen angegeben.

Nachfolgend wird die Erfindung anhand einer ein Ausführungsbeispiel darstellenden Zeichnung näher erläutert Es zeigen in schematischer Darstellung:
- Fig. 1: eine Querschnittsansicht auf das Unterwerkzeug und das Oberwerkzeug einer Formpresse in geöffnetem Zustand;
- Fig. 2: eine Querschnittsansicht auf die Formwerkzeuge gemäß Fig. 1 in geschlossenem Zustand;
- Fig. 3: eine Querschnittsansicht auf die Formwerkzeuge gemäß Fig. 1 in wieder geöffnetem Zustand, In welchem ein mit den Formwerkzeugen hergestelltes Formteil ausgestoßen wird;
- Fig. 4: eine Querschnittsansicht auf weitere Formwerkzeuge, mit einer Kavität, in die ein mit den Formwerkzeugen gemäß Fig. 1 hergestelltes Formteil und ein plattenförmiges Schalldämpfungsteil eingelegt werden;
- Fig. 5: eine Querschnittsansicht auf die Formwerkzeuge gemäß Fig. 4 in geschlossenem Zustand; und
- Fig. 6: eine Querschnittsansicht auf die Formwerkzeuge gemäß Fig. 4 in wieder geöffnetem Zustand, in welchem ein mit den Formwerkzeugen hergestelltes erfindungsgemäßes Verbundteil ausgestoßen wird.

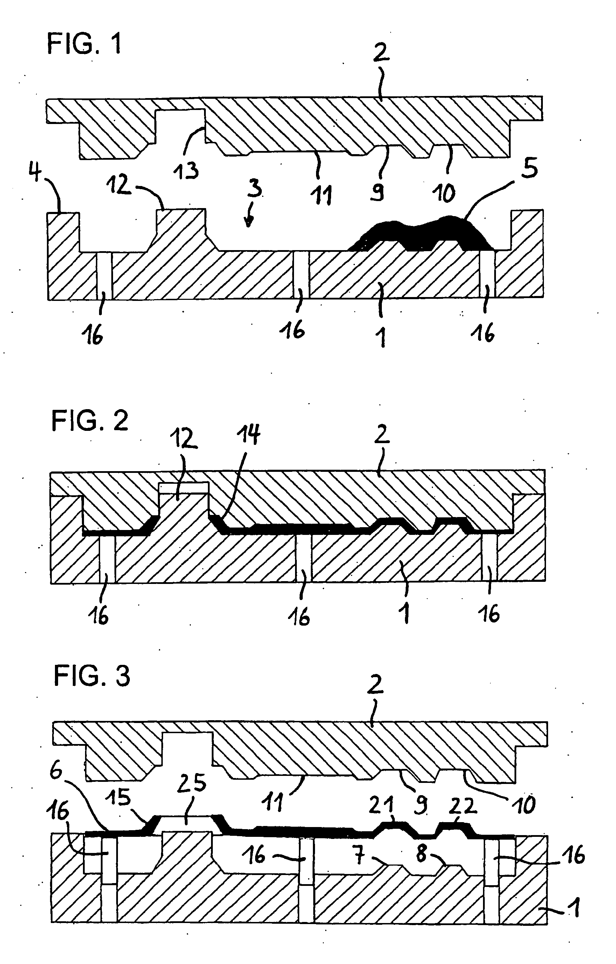

In den Figuren 1 bis 3 ist mit 1 ein unteres Formwerkzeuge (Unterwerkzeug) und mit 2 ein oberes Formwerkzeug (Oberwerkzeug) einer ansonsten nicht näher dargestellten Formpresse zur Herstellung einer Schwerschicht eines schallisollerenden Verbundteils bezeichnet Die Formwerkzeuge 1, 2 sind relativ zueinander bewegbar. Das Unterwerkzeug 1 kann dabei beispielsweise feststehend gelagert sein, während das Oberwerkzeug 2 mittels einer hydraulischen Stelivorrichtung auf das Unterwerkzeug 1 zu- und von diesem wegbewegbar ist.

Das Unterwerkzeug 1 weist eine Formkavität 3 auf, die durch eine umlaufende Tauchkante 4 definiert Ist. In die offene Kavität 3 wird im Strangabiegeverfahren ein bestimmtes Volumen eines Schwerschichtmaterials als plastifizierte Masse 5 eingebracht. Bei dem Schwerschichtmaterial handelt es sich um eine hochgefüllte Kunststoffmasse, vorzugsweise aus der Gruppe der thermoplastischen Elastomere (TPE). Insbesondere können die thermoplastischen Polyolefin-Elastomere TPO oder TPV verwendet werden, die aus Polypropylen mit bis zu 65% eingearbeitetern Ethylen-Propylen-[Dien] Kautschuk (EP[D]M) bestehen. Gut geeignet sind ferner auch thermoplastische Elastomere vom Typ TPS (Styrol TPE) und Massen aus PE-EVA (Polyethylen-Ethylen-Vinyl-Acetat).

Die Plastifizierung der Kunststoffmasse 5 erfolgt vorzugsweise mittels einer Extrudervorrichtung. Die plastifizierte Masse wird in Chargen dosiert, wobei jede Charge im Wesentlichen genau dem Volumen einer herzustellenden Schwerschicht 6 entspricht. Die jeweilige Schwerschicht 6 wird somit abfallfrei durch Einbringen eines bauteilspezifischen Volumens des plastifizierten Schwerschichtmaterials in die Kavität 3 des Unterwerkzeuges 1 hergestellt. Es liegt im Rahmen der Erfindung, die plastifizierte Masse 5 gegebenenfalls schlangenförmig und/oder an mehreren Stellen auf den Boden der Kavität 3 aufzutragen. Hierzu kann eine bewegliche Auftragseinrichtung verwendet werden, die eine automatisch verfahrbare Austragsdüse aufweist Zudem liegt es im Rahmen der Erfindung, an bestimmten Stellen der Kavität 3 hinsichtlich der Zusammensetzung verschiedene plastifizierte Schwerschichtmassen einzubringen. Die Schwerschichtmassen können sich dabei insbesondere hinsichtlich ihres Füllstoffanteils unterscheiden, so dass die daraus hergestellte Schwerschicht 6 schließlich Bereiche unterschiedlicher Dichte bzw. Flächengewichte aufweist.

Das Oberwerkzeug 2 ist so gestaltet, dass es mit sehr geringem Spiel in die Kavität 3 eintauchen kann. Das Unterwerkzeug 1 weist innerhalb seiner Kavität 3 mehrere in Bezug auf den Boden vorstehende Erhebungen 7, 8 auf. Diesen Erhebungen sind entsprechend geformte Vertiefungen 9, 10 in der Unterseite des Oberwerkzeuges 2 zugeordnet. Die Erhebungen 7, 8 und Vertiefungen 9, 10 der Formwerkzeuge 1, 2 bewirken die Ausbildung eines Reliefs bzw. einer Profilstruktur an der Schwerschicht 6. Die Profilstruktur kann der Anpassung der Schwerschicht 6 bzw. des daraus hergestellten Verbundteils an Aggregate, beispielsweise Aggregate im Motorraum eines Kraftfahrzeuges dienen. Die Profilstruktur der Schwerschicht 6 kann jedoch auch oder nur eine akustische Funktion haben.

Die Formwerkzeuge 1, 2 sind so gestaltet, dass die mit ihnen hergestellte Schwerschicht 6 Bereiche unterschiedlicher Dicke aufweist. Diesbezüglich ist in den Figuren 1 bis 3 beispielsweise zu erkennen, dass das Oberwerkzeug 2 eine Vertiefung 11 aufweist, wobei das Unterwerkzeug 1 an seiner der Vertiefung 11 zugewandten Stelle keine Erhebung aufweist, sondern im Wesentlichen eben ausgebildet ist. Die örtliche Dicke der Schwerschicht 6 ist in Abhängigkeit der akustischen Erfordernisse am Einbauort gewählt.

Das Unterwerkzeug 1 weist in der Formkavität 3 ferner einen oder mehrere zapfenförmige Vorsprünge 12 auf, denen entsprechende Bohrungen bzw. Vertiefungen 13 im Oberwerkzeug 2 zugeordnet sind. Die Vorsprünge dienen dazu, im herzustellenden Formteil bzw. Verbundteil vorgesehene Durchbrechungen zur Durchführung von Kabelsträngen, Medien-Leitungen, mechanischen Elementen oder dergleichen während des Formpressvorgangs von plastifiziertem Schwerschichtmaterial 5 freizuhalten (vgl. Fig. 2). Der zapfenförmige Vorsprung 12 und die ihm zugeordnete Vertiefung 13 begrenzen im geschlossenen Zustand der Formwerkzeuge 1, 2 einen konisch geformten Ringraum 14, in den ein Teil der plastifizierten Masse 5 während des formgebenden Pressvorgangs eindringen kann. Auf diese Weise können an der Schwerschicht 6 tüllen- bzw. rohrstutzenförmige Ausformungen 15 gebildet werden, die der abdichtenden Durchführungen von elektrischen oder sonstigen Leitungen dienen, wenn es sich bei dem herzustellenden Verbundteil beispielsweise um eine Stirnwandverkleidung eines Kraftfahrzeuges handeln sollte.

Sobald die plastifizierte Kunststoffmasse 5 durch Schließen der Formwerkzeuge 1, 2 unter Fließen in die Form der Schwerschicht 6 gepresst ist und eine ausreichende Formfestigkeit besitzt, werden die Formwerkzeuge 1, 2 wieder geöffnet und die Schwerschicht 6 aus der Kavität 3 entnommen. Zu diesem Zweck sind im Boden des Unterwerkzeugs 1 vorzugsweise mehrere ein- und ausfahrbare Ausstoßelemente 16 integriert.

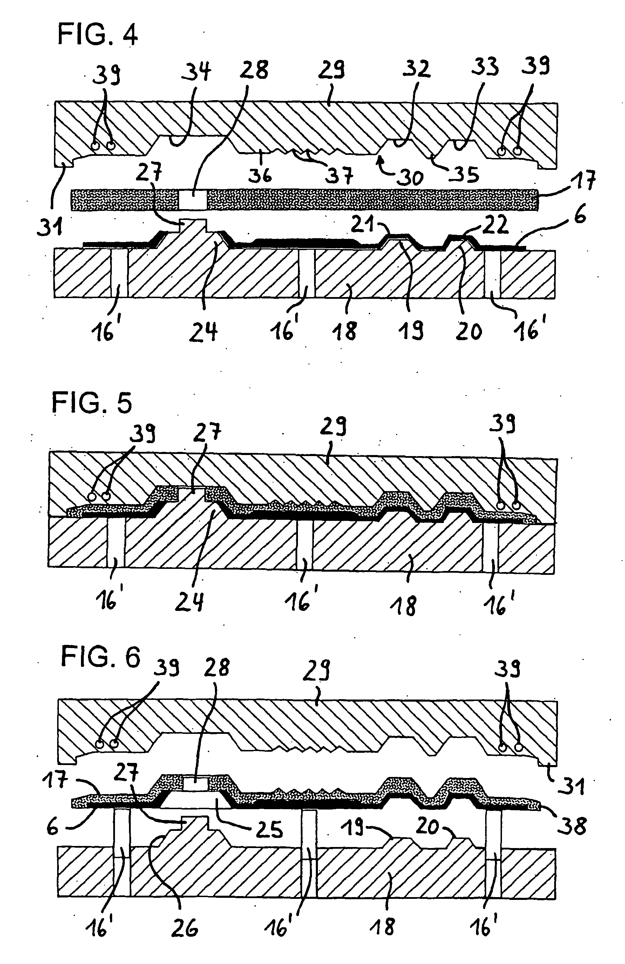

Die so hergestellte Schwerschicht 6 wird dann zum partiellen Verbinden und zum Überprägen mit einer Schalldämpfungsschicht 17 auf einem zweiten Unterwerkzeug 18 angeordnet, wie es in den Figuren 4 bis 6 dargestellt ist. Es ist zu erkennen, dass das Unterwerkzeug 18 ebenfalls Erhebungen 19, 20 aufweist, die in Form und Anordnung den Erhebungen 7, 8 des Unterwerkzeugs 1 gemäß den Figuren 1 bis 3 entsprechen und der Aufnahme der in der Schwerschicht 6 ausgebildeten Ausbuchtungen 21, 22 dienen.

Auch weist das Unterwerkzeug 18 gemäß den Figuren 4 bis 6 einen Vorsprung 24 auf, der der Aufnahme des in der Schwerschicht 6 ausgebildeten Durchbruchs 25 dient Der Vorsprung 24 besteht aus einem kegelstumpfförmigen Abschnitt 26 und einem oberen abgesetzten, zylindrischen Abschnitt 27. Letzterer ist einem in der Schalldämpfungsschicht 17 vorgesehenen Durchbruch 28 zugeordnet. Im Gegensatz zu dem Unterwerkzeug 1 besitzt das Unterwerkzeug 18 keine Tauchkante und keine Kavität. Dagegen enthält das dem Unterwerkzeug 18 zugeordnete Oberwerkzeug 29 eine Kavität 30, die durch einen umlaufenden Vorsprung 31 begrenzt ist. Das Oberwerkzeug 29 weist im Bereich seiner Kavität 30 mehrere Vertiefungen 32, 33, 34 und Erhebungen 35, 36 auf. Die Vertiefungen 32, 33 sind den Erhebungen 19, 20 des Unterwerkzeuges 18 zugewandt, während der Vorsprung 24 des Unterwerkzeuges 18 im geschlossenen Zustand der Formwerkzeuge in die konisch ausgebildete Vertiefung 34 hineinragt. Ferner sind in der Kavität 30 des Oberwerkzeuges 29 zwischen den Vertiefungen 32, 33 und der Vertiefung 34 eine Mehrzahl von kleineren Vertiefungen 37 ausgebildet.

Die von den Formwerkzeugen 18, 29 im geschlossenen Zustand definierte Kavität 30 ist größer als die Kavität 3, welche die Formwerkzeuge 1, 2 im geschlossenen Zustand definieren. Die Vergrößerung der Kavität ist dabei insbesondere am Rand der Schwerschicht 6 und oberhalb des in der Schwerschicht 6 ausgebildeten Durchbruchs 25 zu erkennen.

Die mit der Schwerschicht 6 zu verbindende Schalldämpfungsschicht (Schallabsorber) 17 kann aus porösem und/oder textilem Material, insbesondere aus Vliesstoff und/oder Schaumstoff gebildet sein. Die in den Figuren 4 bis 6 dargestellte Schalldämpfungsschicht 17 ist aus einer Schaumstofflage gebildet.

Die Schaumstofflage 17 weist eine Stauchhärte σ_{d40} von nicht weniger als 4 kPa und einen Druckverformungsrest im Bereich von 3 bis 6 % (bei vorherigem Zusammendrücken um 50% und einer 72-stündigen Lagerung bei 70°C) auf. Eine solche Schaumstofflage besitzt ein hohes Rückstellvermögen, was für die Erzielung eines möglichst großen Absorbervolumens nach Abschluss des Formpressvorgangs von Vorteil ist. Unter der Stauchhärte σ_{d40} wird die zu einer Verformung von 40% erforderliche Druckspannung verstanden (vgl. DIN EN ISO 3386-1/2). Der Druck-Verformungsrest ist in der DIN EN ISO 1856 definiert. Danach werden Quader von 50 mm x 50 mm x 25 mm in der Dicke von 25 mm zwischen Stahlplatten um 50 oder 75% zusammengedrückt und 72 Stunden bei Normalklima bzw. bei 70°C gelagert.

Der Druck-Verformungsrest ist der nach Entlastung bestimmte plastische Verformungsanteil (bleibende Verformung) in %.

Die Schalldämpfungsschicht 17 besteht vorzugsweise aus weichelastischem, offenporigem PUR-Schaumstoff vom Polyether-Typ. Sie hat vorzugsweise eine Schichtdicke von mindestens 10 mm und kann außenseitig mit einem Vlies, beispielsweise mit einem Spinnvlies, beschichtet sein.

Die Schaumstofflage 17 wird in Form eines plattenförmigen Zuschnitts oder geschäumten Spritzgussteils zwischen den geöffneten Formwerkzeugen 18, 29 derart angeordnet, dass der zylindrische Abschnitt 27 des Vorsprungs 24 des Unterwerkzeugs 18 innerhalb des in ihr vorgesehenen Durchbruchs 28 aufgenommen ist. Das Auflegen der Schalldämpfungsschicht bzw. Schaumstofflage 17 erfolgt vorzugsweise mittels eines Roboters. Alternativ kann die Schaumstofflage auch aus mehreren Zuschnitten und/oder geschäumten Spritzgussteilen gebildet werden. Der oder die Zuschnitte bzw. das geschäumte Spritzgussteil bzw. die geschäumten Spritzgussteile sind so bemessen, dass beim Schließen der Formwerkzeuge 18, 29 kein Schaumstoff- oder Vliesmaterial an dem umlaufenden Vorsprung 31 des Oberwerkzeuges 29 abgeschnitten wird, so dass insgesamt abfallfrei gearbeitet wird.

In dem in den Figuren 4 bis 6 dargestellten Ausführungsbeispiel ist der Durchmesser des Durchbruchs 28 in der Schalldämpfungsschicht 17 kleiner als der Durchmesser des Durchbruchs 25 in der Schwerschicht 6. Ferner ist die Schalldämpfungsschicht 17 und dementsprechend die Kavität 30 im Oberwerkzeug 29 in Bezug auf die Schwerschicht 6 so bemessen, dass der Umfang der Schalldämpfungsschicht 17 den Umfang der Schwerschicht 6 an einem oder mehreren Abschnitten oder - falls gewünscht - vollumfänglich überragt.

Die Schalldämpfungsschicht 17 wird mit der Schwerschicht 6 beim Schließen der Formwerkzeuge 18, 29 punktuell verschweißt, um hinsichtlich eines Recyclings des erzeugten Verbundteils 38 eine sortenreine Trennung von Schwerschicht 6 und Schalldämpfungsschicht 17 zu erleichtern. Das punktuelle Verschweißen von Schalldämpfungsschicht 17 und Schwerschicht 6 erfolgt mittels mehrerer im Oberwerkzeug 29 integrierter, flächenmäßig begrenzter Schweißelemente 39. In den Figuren 4 bis 6 sind die Schweißelemente 39 schematisch durch Kreise angedeutet. Als Schweißelemente 39 können kleinbauende elektrische Heizelemente, Ultraschall-Schweißelement oder Hochfrequenz-Schweißelemente zum Einsatz kommen.

Während des punktuellen Verschweißens wird die Schalldämpfungsschicht 17 zugleich thermisch umgeformt und erhält so die der Kavität 30 des Oberwerkzeuges 29 entsprechende Proflistruktur. Hierzu sind im Oberwerkzeug 29 im Bereich der Erhebungen 35, 36 und vertiefungen 32, 33, 34, 37 mehrere Heizelemente (nicht gezeigt) integriert. Die Heizleistung des jeweiligen Helzelements wird so gesteuert, dass die Schalldämpfungsschicht 17 nur an vorgegebenen, flächenmäßig sehr begrenzten Stellen mit der Schwerschicht 6 punktuell verschweißt wird, beispielsweise nur an Punkten im Randbereich des Verbundteils 38 und/oder an Punkten im Bereich von Erhebungen bzw. Vertiefungen des Verbundteils 38. Zur Steuerung bzw. Beschleunigung der Verfestigung der Schweißstellen sowie der thermische Umformung der Schalldämpfungsschicht 17 können im Unterwerkzeug 18 und/oder im Oberwerkzeug 29 auch noch Kühlvorrichtungen integriert sein.

Sobald die thermische Umformung der Schalldämpfungsschicht 17 erfolgt ist und die Schweißstellen ausreichend fest sind, werden die Formwerkzeuge 18, 29 auseinander gefahren und das fertige Verbundteil 38 entnommen. Zur Erleichterung der Entnahme verfügt auch das Unterwerkzeug 18 über mehrere ein- und ausfahrbare Ausstoßelemente 16'.

Es ist zu erkennen, dass die Schwerschicht 6 und die Schalldämpfungsschicht 17 des fertigen Verbundteils 38 derart miteinander verbunden sind, dass die Schwer schicht 6 ohne Zwischenraum, konturparallel an die Schalldämpfungsschicht 17 angrenzt. Infolge der thermischen Umformung weist die Schalldämpfungsschicht 17 Bereiche unterschiedlicher Verdichtung bzw. Dicke auf. Die örtliche Dicke bzw. Verdichtung der Schalldämpfungsschicht 17 ist in Abhängigkeit der jeweiligen akustischen Erfordernisse am Einbauort des Verbundteils 38 gewählt.

Die Erfindung ist in ihrer Ausführung nicht auf die vorstehend beschriebenen Ausführungsbeispiele beschränkt. Vielmehr sind mehrere Varianten denkbar, die auch bei grundsätzlich abweichender Gestaltung von dem in den beiliegenden Ansprüchen angegebenen Erfindungsgedanken Gebrauch machen. So können die Schweißelemente 39 zum punktuellen Verschweißen von Schwerschicht 6 und Schalldämpfungsschicht 17 zusätzlich oder alternativ auch im Unterwerkzeug 18 integriert sein.

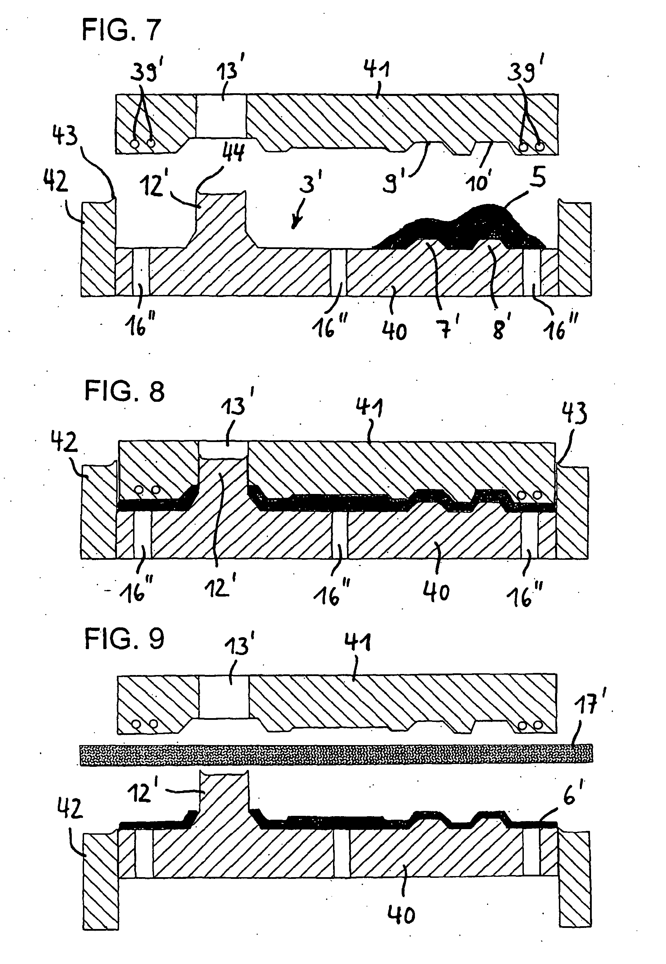

Wie in Fig. 9 gezeigt, kann der Bahnabschnitt der Schalldämpfungsschicht 17' über die äußeren Kanten der Formwerkzeuge 40, 41 hinausragen.

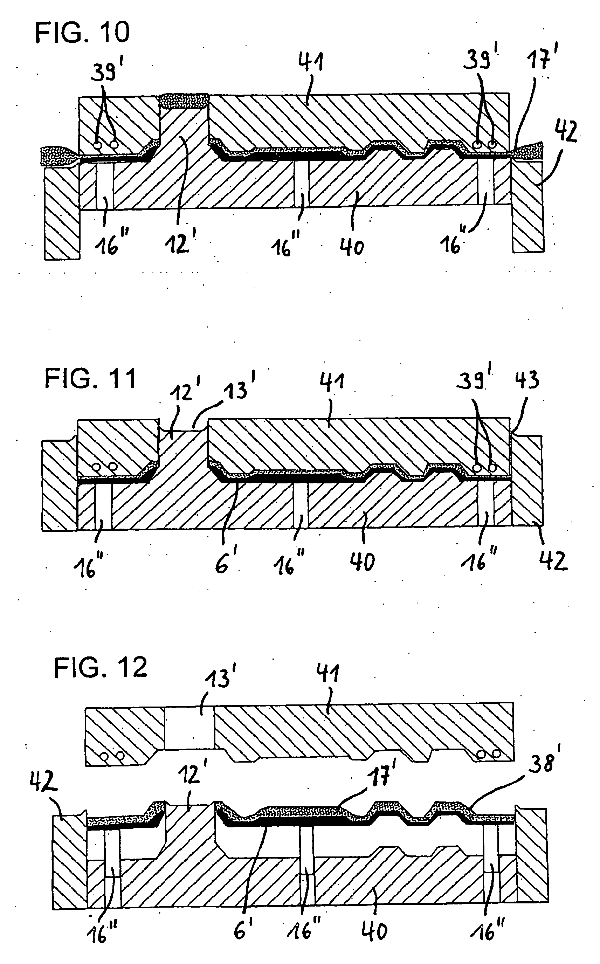

Anschließend werden die Formwerkzeuge 40, 41 wieder geschlossen, wobei der zapfenförmige Vorsprung 12' mit seiner Schneidkante 44 durch die Schalldämpfungsschicht 17' dringt und ein Stück der Schicht 17' ausstanzt (Fig. 10). Während die Schalldämpfungsschicht 17' und die Schwerschicht 6' zusammengepresst sind, wird die Tauchkante 42 angehoben, so dass deren umlaufende Schneidkante 43 die aus den Formwerkzeugen 40, 41 seitlichen herausstehenden Abschnitte der Schalldämpfungsschicht 17' abschneiden (vgl. Figuren 10 und 11).

Die Schwerschicht 6' wird auf diese Weise mit der Schalldämpfungsschicht 17' überprägt, wobei zum punktuellen Verschweißen von Schalldämpfungsschicht 17' und Schwerschicht 6' wiederum mehrere flächenmäßig begrenzte Schweißelemente 39' im Oberwerkzeug 41 integriert sind, die in der Zeichnung in Form von Kreisen schematisch angedeutet sind. Zeitparallel zu der punktuellen Verschweißung erfolgt die thermische Umformung der Schalldämpfungsschicht 17'. Zur Vermeidung von Wiederholungen wird diesbezüglich auf die vorstehenden Erläuterungen in Bezug auf Fig. 5 verwiesen.

Schließlich werden die Formwerkzeuge 40, 41 wieder auseinander gefahren und das fertige Verbundteil 38' mittels der im Unterwerkzeug 40 integrierten Ausstoßelemente 16" für die Entnahme ausgestoßen.

Die Erfindung ist in ihrer Ausführung nicht auf die vorstehend beschriebenen Ausführungsbeispiele beschränkt. Vielmehr sind mehrere Varianten denkbar, die auch bei grundsätzlich abweichender Gestaltung von dem in den beiliegenden Ansprüchen angegebenen Erfindungsgedanken Gebrauch machen. So können die Schweißelemente 39, 39' zum punktuellen Verschweißen von Schwerschicht 6, 6' und Schalldämpfungsschicht 17, 17' zusätzlich oder alternativ auch im Unterwerkzeug 18 bzw. 40 integriert sein.

## Patentansprüche

1. Verfahren zur Herstellung eines schallisollerenden Verbundteils, insbesondere für Kraftfahrzeuge, bei dem das Verbundteil (38) eine Schwerschicht (6) bestehend aus einem thermoplastischen Elastomer und eine damit verbundene Schalldämpfungsschicht (17) aus porösem und/oder textilem Material aufweist,
umfassend die Schritte:
- Einbringen eines bestimmten Volumens eines Schwerschichtmaterials als plastifizierte Masse (5) in eine offene Kavität (3) einer ein Unter- und ein Oberwerkzeug (1, 2) aufweisenden Presse,
- Schließen der Presse, wobei die plastifizierte Masse (5) In der von Unter- und Oberwerkzeug definierten Kavität unter Fließen in die Form der Schwerschicht (6) gepresst wird,
- Öffnen der Presse nachdem die Schwerschicht Formfestigkeit aufweist,
- Anordnen der Schalldämpfungsschicht (17) in Form einer Bahn, eines Zuschnitts oder Spritzgussteils auf der Schwerschicht (6),
**dadurch gekennzeichnet, dass**
die Schwerschicht (6) und die Schalldämpfungsschicht (17) in der Presse oder einer weiteren Presse miteinander partiell verschweißt werden, indem mehrere in der Presse oder weiteren Presse Integrierte, flächenmäßig begrenzte Schweißelemente aktiviert werden,
dass die Schalldämpfungsschicht (17) während des partiellen Verschweißens mit der Schwerschicht (6) thermisch umgeformt wird, so dass die Schalldämpfungsschicht (17) eine Profilstruktur erhält, und
dass die Schalldämpfungsschicht (17) in Bezug auf die Schwerschicht (6) so bemessen wird, dass der Umfang der Schalldämpfungsschicht (17) den Umfang der Schwerschicht (6) an einem oder mehreren Abschnitten oder vollumfänglich überragt.

2. Verfahren nach Anspruch 1,
**dadurch gekennzeichnet, dass** die Schwerschicht (6) und die Schalldämpfungsschicht (17) derart miteinander verbunden werden, dass die Schwerschicht (6) ohne Zwischenraum, konturparallel an die Schalldämpfungsschicht (17) angrenzt.

3. Verfahren nach Anspruch 1 oder 2,
**dadurch gekennzeichnet, dass** die Schwerschicht (6) derart ausgebildet wird, dass sie Bereiche unterschiedlicher Dicke und/oder Dichte aufweist.

4. Verfahren nach einem der Ansprüche 1 bis 3,
**dadurch gekennzeichnet, dass**
die Schalldämpfungsschicht (17) aus einer weichelastischen, offenporigen Schaumstofflage gebildet wird.

5. Verfahren nach einem der Ansprüche 1 bis 4,
**dadurch gekennzeichnet, dass**
die Schalldämpfungsschicht (17) aus PUR-Schaumstoff vom Polyether-typ gebildet wird.

6. Verfahren nach einem der Ansprüche 1 bis 5,
**dadurch gekennzeichnet, dass**
die Schalldämpfungsschicht (17) aus einer vliesbeschlchteten Schaumstofftage gebildet wird.

7. Verfahren nach einem der Ansprüche 1 bis 6,
**dadurch gekennzeichnet, dass** die Schalldämpfungsschicht (17) derart ausgebildet wird, dass sie Bereiche unterschiedlicher Verdichtung aufweist.

8. Verfahren nach einem der Ansprüche 1 bis 7,
**dadurch gekennzeichnet, dass**
die Schalldämpfungsschicht (17) derart ausgebildet wird, dass sie Bereiche unterschiedlicher Dicke und/oder Dichte aufweist

9. Verfahren nach einem der Ansprüche 1 bis 8,
**dadurch gekennzeichnet, dass**
die Schalldämpfungsschicht (17) aus einem Schaumstoff gebildet wird, der eine Stauchhärte σ_{d40} von nicht weniger als 4 kPa und einen Druckverformungsrest bei vorherigem Zusammendrücken um 50% und einer 72-stündigen Lagerung bei 70°C im Bereich von 3 bis 6 % aufweist.

10. Verfahren nach einem der Ansprüche 1 bis 9,
**dadurch gekennzeichnet, dass**
zum partiellen Verschweißen von Schwerschicht (6) und Schalldämpfungsschicht (17) das Unterwerkzeug (1) und/oder das Oberwerkzeug (2) gegen ein Unterwerkzeug (18) bzw. Oberwerkzeug (29) ausgetauscht wird, das zu einer Vergrößerung der von Unterwerkzeug (1) und Oberwerkzeug (2) definierten Kavität führt.

11. Verfahren nach Anspruch 10,
**dadurch gekennzeichnet, dass**
die Vergrößerung der Kavität am Rand der Schwerschicht (6) und/oder im Bereich eines in der Schwerschicht (6) ausgebildeten Durchbruchs (25) erfolgt

12. Schallisollerendes Verbundteil, insbesondere für Kraftfahrzeuge, mit einer Schwerschicht (6) und einer damit verbundenen Schalldämpfungsschicht (17) aus porösem und/oder textilem Material, wobei die Schwerschicht (6) durch Fließpressen einer im Strangablegeverfahren zugeführten plastifizierten Kunststoffmasse (5) aus der Gruppe der thermoplastischen Elastomere als Formteil ausgebildet ist und Bereiche unterschiedlicher Dicke und/oder Dichte aufweist,
**dadurch gekennzeichnet, dass**
die Schwerschicht (6) nur stellenweise mit der Schalldämpfungsschicht (17) verschweißt Ist, wobei die Schalldämpfungsschicht eine durch thermisches Umformen gebildete Profilstruktur aufweist und der Umfang der Schalldämpfungsschicht (17) den Umfang der Schwerschicht (6) zumindest abschnittsweise überragt.

13. Verbundteil nach Anspruch 12,
**dadurch gekennzeichnet, dass** die Schwerschicht (6) ohne Zwischenraum, konturparallel an die Schalldämpfungsschicht (17) angrenzt.

14. Verbundteil nach Anspruch 12 oder 13,
**dadurch gekennzeichnet, dass** die Schalldämpfungsschicht (17) aus einer weichelastischen, offenporigen Schaumstofflage gebildet ist.

15. Verbundteil nach einem der Ansprüche 12 bis 14,
**dadurch gekennzeichnet, dass** die Schalldämpfungsschicht (17) aus PUR-Schaumstoff vom Polyether-Typ gebildet ist.

16. Verbundteil nach einem der Ansprüche 12 bis 15,
**dadurch gekennzeichnet, dass** die Schalldämpfungsschicht (17) aus einer vliesbeschichteten Schaumstofflage gebildet ist

17. Verbundteil nach einem der Ansprüche 12 bis 16,
**dadurch gekennzeichnet, dass** die Schalldämpfungsschicht (17) Bereiche unterschiedlicher Verdichtung aufweist.

18. Verbundteil nach einem der Ansprüche 12 bis 17,
**dadurch gekennzeichnet,dass**
die Schalldämpfungsschicht (17) aus einem Schaumstoff gebildet ist, der eine Stauchhärte σ_{d40} von nicht weiniger als 4 kPa und einen Druckverformungsrest bei vorherigem Zusammendrücken um 50% und einer-72-stündigen Lagerung bei 70°C im Bereich von 3 bis 6 % aufweist.

19. Verbundteil nach einem der Ansprüche 12 bis 18,
**dadurch gekennzeichnet, dass** in der Schwerschicht (6) und der Schalldämpfungsschicht (17) jeweils mindestens ein Durchbruch (25, 28) ausgebildet ist, wobei die beiden Durchbrüche (25, 28) einen gemeinsamen Durchbruch bilden und der Durchmesser des Durchbruchs (28) in der Schalldämpfungsschicht (17) kleiner ist als der Durchmesser des Durchbruchs (25) in der Schwerschicht (6).

## Claims

1. A method for producing a sound-insulating composite component, in particular for motor vehicles, in which method the composite component (38) comprises a heavy layer (6) consisting of a thermoplastic elastomer and a sound attenuation layer (17) connected with said heavy layer (6) and is made of a porous and/or textile material, comprising the steps of:
- placing a certain volume of a heavy-layer material as a plasticized compound (5) into an open cavity (3) of a press comprising a lower die (1, 2) and an upper die (40, 41);
- closing the press, wherein the plasticized compound (5) is extrusion-pressed into the form of the heavy layer (6) in the cavity defined by the lower die and the upper die;
- opening the press after the heavy layer has attained non-deformability;
- arranging the sound attenuation layer (17) in the form of a web, a blank or an injection moulded part on the heavy layer (6);
**characterized in that**
the heavy layer (6) and the sound attenuation layer (17) are partially welded together in the press or in a further press **in that** several welding elements that are delimited in area and that are integrated in the press or in the further press are activated; during partial welding to the heavy layer (6) the sound attenuation layer (17) thermally formed so that the sound attenuation layer (17) is given a profile structure; and the sound attenuation layer (17) is dimensioned in such a way in relation to the heavy layer (6) that the circumference of the sound attenuation layer (17) reaches beyond the circumference of the heavy layer (6) on one or several sections or on the entire circumference.

2. The method according to claim,
**characterised in that** the heavy layer (6) and the sound attenuation layer (17) are interconnected in such a way that the heavy layer (6) adjoins the sound attenuation layer (17) parallel to its contours and without any gap.

3. The method according to claim 1 or 2,
**characterised in that** the heavy layer (6) is designed such that it comprises regions of different thickness and/or density.

4. The method according to any one of claims 1 to 3, **characterised in that** the sound attenuation layer (17) is formed of a flexible open-pore layer of foam material.

5. The method according to any one of claims 1 to 4, **characterised in that** the sound attenuation layer (17) is made from PUR foam material of the polyether type.

6. The method according to any one of claims 1 to 5, **characterised in that** the sound attenuation layer (17) is made from a nonwoven-fabric-coated foam material layer.

7. The method according to any one of claims 1 to 6, **characterised in that** the sound attenuation layer (17) is designed such that it comprises regions of different compression.

8. The method according to any one of claims 1 to 7, **characterised in that** the sound attenuation layer (17) is designed such that it comprises regions of different thickness and/or density.

9. The method according to any one of claims 1 to 8, **characterised in that** the sound attenuation layer (17) is made from a foam material that has a compression hardness σ_{d40} of no less than 4 kPa and a permanent set ranging from 3 to 6 %, having previously been compressed by 50% and stored for 72 hours at 70°C.

10. The method according to any one of claims 1 to 9, **characterised in that** for partial welding together of the heavy layer (6) and the sound attenuation layer (17) the lower die (1) and/or the upper die (2) are exchanged for the lower die (18) or the upper die (29) respectively, which results in an enlargement of the cavity defined by the lower die (1) and the upper die (2).

11. The method of claim 10,
**characterised in that** the enlargement of the cavity takes place at the margin of the heavy layer (6) and/or in the region of an opening (25) in the heavy layer (6).

12. A sound-insulating composite component, in particular for motor vehicles, comprising a heavy layer (6) and a sound-attenuation layer (17) that is connected with said heavy layer (6) and is made of porous and/or textile material,
**characterised in that** the heavy layer (6) is formed as a moulded part by extrusion-pressing a plasticized plastic compound (5), fed-in in the strand placement process, from the group of thermoplastic elastomers, comprises regions of different thickness and/or density, **characterised in that** the heavy layer (6) is welded to the sound attenuation layer (17) only in some parts, wherein the sound attenuation layer has a profile structure that is formed by thermal forming, and at least in some sections the circumference of the sound attenuation layer (17) reaches beyond the circumference of the heavy layer (6).

13. The composite component of claim 12,
**characterised in that** the heavy layer (6) adjoins the sound attenuation layer (17) parallel to its contours and without any gap.

14. The composite component according to claim 12 or 13, **characterised in that** the sound attenuation layer (17) is made from a flexible open-pore layer of foam material.

15. The composite component according to any one of claims 12 to 14, **characterised in that** the sound attenuation layer (17) is made from PUR foam material of the polyether type.

16. The composite component according to any one of claims 12 to 15, **characterised in that** the sound attenuation layer (17) is made from a nonwoven-fabric-coated foam material layer.

17. The composite component according to any one of claims 12 to 16, **characterised in that** the sound attenuation layer (17) comprises regions of different compression.

18. The composite component according to any one of claims 12 to 17, **characterised in that** the sound attenuation layer (17) is made of a foam material that has a compression hardness σ_{d40} of no less than 4 kPa and a permanent set ranging from 3 to 6 %, having previously been compressed by 50% and stored for 72 hours at 70°C.

19. The composite component according to any one of claims 12 to 18, **characterised in that** the heavy layer (6) and the sound attenuation layer (17) each comprise at least one opening (25, 28), wherein the two openings (25, 28) form a joint opening, and the diameter of the opening (28) in the sound attenuation layer (17) is smaller than the diameter of the opening (25) in the heavy layer (6).

## Revendications

1. Procédé pour la fabrication d'une pièce composite d'insonorisation, en particulier pour véhicules automobiles, selon lequel la pièce composite (38) présente une couche lourde (6), qui consiste en un élastomère thermoplastique, et une couche d'insonorisation (17) en matière poreuse et / ou textile, liée à ladite couche lourde, ce procédé comprenant les étapes suivantes:
- apport d'un volume défini de matière de couche lourde, sous la forme d'une masse plastifiée (5), dans une cavité ouverte (3) d'une presse, qui présente un outil inférieur et un outil supérieur (1, 2),
- fermeture de la presse, la masse plastifiée (5) étant pressée, sous fluage, en forme de couche lourde (6), dans la cavité définie par l'outil inférieur et l'outil supérieur,
- ouverture de la presse, après solidification de la couche lourde,
- agencement de la couche d'insonorisation (17) sous la forme d'une bande, d'une découpe ou d'une pièce moulée par injection, sur la couche lourde (6),
**caractérisé en ce que** la couche lourde (6) et la couche d'insonorisation (17) sont soudées partiellement dans la presse ou dans une autre presse en activant plusieurs éléments de soudage intégrés dans ladite presse ou ladite autre presse et limités au niveau de leur étendue,
que la couche d'insonorisation (17) est déformée thermiquement, pendant le soudage partiel avec la couche lourde (6), de manière à ce que ladite couche d'insonorisation (17) présente une structure profilée, et que la couche d'insonorisation (17) soit dimensionnée, par rapport à la couche lourde (6), de sorte que le pourtour de la couche d'insonorisation (17) dépasse le pourtour de la couche lourde (6) sur une ou plusieurs sections ou sur tout le pourtour.

2. Procédé selon la revendication 1, **caractérisé en ce que** la couche lourde (6) et la couche d'insonorisation (17) sont liées l'une à l'autre de telle manière que la couche lourde (6) avoisine, sans intervalle, à contour parallèle, la couche d'insonorisation (17).

3. Procédé selon revendication 1 ou 2, **caractérisé en ce que** la couche lourde (6) est formée de sorte qu'elle présente des zones d'épaisseur ou de densité différente.

4. Procédé selon l'une des revendications 1 à 3, **caractérisé en ce que** la couche d'insonorisation (17) est constituée d'une couche de mousse élastique souple, à pores ouverts.

5. Procédé selon l'une des revendications 1 à 4, **caractérisé en ce que** la couche d'insonorisation (17) est formée en mousse polyuréthane du type polyéther.

6. Procédé selon l'une des revendications 1 à 5, **caractérisé en ce que** la couche d'insonorisation (17) est constituée d'une couche de mousse revêtue de non-tissé.

7. Procédé selon l'une des revendications 1 à 6, **caractérisé en ce que** la couche lourde (6) est formée de telle manière qu'elle présente des zones de densification différente.

8. Procédé selon l'une des revendications 1 à 7, **caractérisé en ce que** la couche d'insonorisation (17) est formée de telle manière qu'elle présente des zones d'épaisseur ou de densité différente.

9. Procédé selon l'une des revendications 1 à 8, **caractérisé en ce que** la couche d'insonorisation (17) est formée en mousse, qui présente une résistance à l'écrasement σ_{d40}, qui n'est pas inférieure à 4kPa et une déformation permanente située dans une plage de 3 à 6%, lors d'une compression préalable d'environ 50% et d'un stockage de 72 heures à 70°C.

10. Procédé selon l'une des revendications 1 à 9, **caractérisé en ce que**, pour souder partiellement la couche lourde (6) et la couche d'insonorisation (17), l'outil inférieur (1) et / ou l'outil supérieur (2) sont échangés contre un outil inférieur (18), respectivement un outil supérieur (29), ce qui conduit à un agrandissement de la cavité définie par l'outil inférieur (1) et l'outil supérieur (2).

11. Procédé selon la revendication 10, **caractérisé en ce que** l'agrandissement de la cavité est effectué sur le bord de la couche lourde (6) et / ou dans la région d'un passage (26) formé dans la couche lourde (6).

12. Pièce composite d'insonorisation, en particulier pour véhicules automobiles, avec une couche lourde (6) et, reliée à celle-ci, une couche d'insonorisation (17) en matière poreuse et / ou textile, la couche lourde (6) étant réalisée en tant que pièce moulée par extrusion d'une masse de matière synthétique (5), appartenant au groupe des élastomères thermoplastiques, selon le procédé d'extrusion à filière plate, mobile et présentant des zones d'épaisseur et / ou de densité différente, **caractérisée en ce que** la couche lourde (6) n'est soudée avec la couche d'insonorisation (17) que par sections, la couche d'insonorisation présentant une structure profilée, formée par déformation thermique, et le pourtour de la couche d'insonorisation (17) dépassant le pourtour de la couche lourde (6), au moins par sections.

13. Pièce composite selon la revendication 12, **caractérisée en ce que** la couche lourde (6) avoisine, sans intervalle, à contour parallèle, la couche d'insonorisation (17).

14. Pièce composite selon revendication 12 ou 13, **caractérisée en ce que** la couche d'insonorisation (17) est formée par une couche de mousse élastique souple, à pores ouverts.

15. Pièce composite selon l'une des revendications 12 à 14, **caractérisée en ce que** la couche d'insonorisation (17) est formée en mousse polyuréthane du type polyéther.

16. Pièce composite selon l'une des revendications 12 à 15, **caractérisée en ce que** la couche d'insonorisation (17) est formée par une couche de mousse revêtue de non-tissé.

17. Pièce composite selon l'une des revendications 12 à 16, **caractérisée en ce que** la couche d'insonorisation (17) présente des zones différemment compactées.

18. Pièce composite d'insonorisation selon l'une des revendications 12 à 17, **caractérisée en ce que** la couche d'insonorisation (17) est formée en mousse, qui présente une résistance à l'écrasement σ_{d40}, qui n'est pas inférieure à 4kPa et un écart permanent situé dans une plage de 3 à 6%, lors d'une compression préalable d'environ 50% et d'un stockage de 72 heures à 70°C.

19. Pièce composite selon l'une des revendications 12 à 18, **caractérisée en ce que**, dans la couche lourde (6) et dans la couche d'insonorisation (17), est respectivement formé au moins un passage (25, 28), les deux passages (25, 28) formant un passage commun, et le diamètre du passage (28), pratiqué dans la couche d'insonorisation (17), étant plus petit que le diamètre du passage (28), pratiqué dans la couche lourde (6)).
